# EUROPÄISCHE PATENTSCHRIFT

(11) **EP 3 601 393 B1**
(45) Veröffentlichungstag und Bekanntmachung des Hinweises auf die Patenterteilung: **26.06.2024**
(21) Anmeldenummer: 18714432.4
(22) Anmeldetag: 19.03.2018
(51) Int. Cl.: C08G 18/12, C09D 175/06, C08G 18/38, C08G 18/42, C08G 18/44, C08G 18/73

(54) **BESCHICHTUNGSSTOFFZUSAMMENSETZUNG, DARAUS HERGESTELLTE BESCHICHTUNGEN UND DEREN VERWENDUNG ALS EROSIONSSCHUTZ**
COATING MATERIAL COMPOSITION, COATINGS PRODUCED THEREFROM AND THE USE THEREOF AS EROSION PROTECTION
COMPOSITION DE MATIÈRE DE REVÊTEMENT, REVÊTEMENTS FABRIQUÉS À PARTIR DE CELLE-CI ET LEUR UTILISATION COMME PROTECTION ANTI-ÉROSION

(30) Priorität: 29.03.2017 DE 102017003034
(43) Veröffentlichungstag der Anmeldung: 05.02.2020
(73) Patentinhaber: Mankiewicz Gebr.&Co. (GmbH&CO. KG), 21107 Hamburg (DE)
(72) Erfinder: WEINHOLD, Alexander, 21073 Hamburg (DE); FREY, Antje-Sybille, 22089 Hamburg (DE); COSTA, Philipp, 21129 Hamburg (DE); WEHNER, Jochen, 21075 Hamburg (DE)
(86) Internationale Anmeldenummer: PCT/DE2018/100239
(87) Internationale Veröffentlichungsnummer: WO 2018/177466

(56) Entgegenhaltungen:
- WO-A1-2010/103719
- WO-A1-2016/116376

## Beschreibung

Die vorliegende Erfindung betrifft Beschichtungsstoffzusammensetzungen, welche zur Herstellung von besonders erosionsstabilen Beschichtungen eingesetzt werden. Die Erfindung betrifft auch die Verwendung dieser Beschichtungen als Erosionsschutz, insbesondere als Kantenschutz für Rotorblätter.

Oberflächen von Objekten, die mechanischen Belastungen durch Erosion ausgesetzt sind, werden üblicherweise mit einem Erosionsschutz versehen. Unter dem Begriff Erosion wird im Folgenden die Beschädigung eines Materials insbesondere an seiner Oberfläche durch flüssige oder feste Stoffe verstanden, welche sich in Form von Tropfen oder Partikeln in einem gasförmigen oder flüssigen Medium bewegen. Bekannte Beispiele sind die Erosion durch Regen, Hagel, Staub oder Sand an Rotorblättern von Windkraftanlagen, Hubschraubern, Flugzeugfügeln und Schiffsschrauben.

Die Beständigkeit von Oberflächen gegenüber Erosion wird durch die Applikation von Beschichtungen erreicht, welche einerseits hinreichend elastisch sind, um die Aufprallkräfte abzufangen. Andererseits müssen sie ausreichende Härte und Abrasionsbeständigkeit aufweisen. Mit diesen Erosionsschutz-beschichtungen kann die gesamte Oberfläche eines Bauteils, z.B. eines Rotorblatts, beschichtet sein. Es können dabei auch nur besonders exponierte Oberflächenareale des Bauteils wie z.B. die Vorderkante eines Rotorblatts beschichtet sein.

Aus WO 2015/120941 sind erosionsstabile Beschichtungsstoffe mit einer Stamm- und einer Härterkomponente bekannt, wobei die Stammkomponente eine Kombination aus Polycarbonatdiolen und Polyasparginsäureestern aufweist und die Härterkomponente ein aliphatische Polyestergruppen aufweisendes Hexamethylendiisocyanat-Isocyanurat-Präpolymer mit einem Isocyanatgehalt zwischen 5 und 23 % enthält. Ohne die Erosionsstabilität zu verschlechtern, können in diesen Beschichtungsstoffen jedoch nur organosilan-modifizierte Pigmente und Füllstoffe eingesetzt werden. Die Auswahl der einsetzbaren Pigmente und Füllstoffe ist damit eingeschränkt, so dass nicht jeder Farbton ohne Beeinträchtigung des Erosionschutzes eingestellt werden kann. Weiterhin wurde festgestellt, dass das als Wasserfänger üblicherweise eingesetzte Molekularsieb die Erosionsbeständigkeit der Beschichtung deutlich verschlechtert. Ohne den Einsatz von Molekularsieb ist jedoch eine Verarbeitung des Beschichtungsstoffs bei Feuchtigkeit durch die Nebenreaktion der Isocyanatgruppen mit Wasser problematisch.

Aus WO 2016/000845 sind zweikomponentige Beschichtungsstoffe bekannt, wobei die Stammkomponente Polycarbonatpolyole und aliphatische sekundäre Amine, die mindestens eine aliphatische Gruppe zwischen den Stickstoffatomen aufweisen, umfasst und die Härterkomponente polyisocyanat-modifizierte Polyester mit einem Isocyanatgehalt von 4 bis 15 % umfasst. Es wurde festgestellt, dass die aus diesen Beschichtungsstoffen erhaltenen Beschichtungen keine ausreichende Witterungsbeständigkeit aufweisen. Unter dem Begriff Bewitterung wird im Folgenden die Beanspruchung von Beschichtungen durch UV-Strahlung, Temperatur und Feuchtigkeit verstanden, wie sie im Freien durch das Wetter oder im Labor unter künstlichen Bedingungen durch UV-Bestrahlung bei definierten Feuchtigkeitsbedingungen verursacht werden. Weiterhin erweichen die Beschichtungen gemäß WO 2016/000845 unter Temperatureinfluss, wobei die Erosionsbeständigkeit der Beschichtung verloren geht. Da die Oberflächentemperatur eines Rotorblattes einer Windkraftanlage im Betrieb bis zu 80°C betragen kann, wird der Erosionsschutz, der durch die Beschichtung erreicht werden soll, dadurch stark beeinträchtigt.

Aufgabe der vorliegenden Erfindung ist es daher, einen Beschichtungsstoff zur Herstellung von verbesserten Erosionsschutz-Beschichtungen, insbesondere Kantenschutzbeschichtungen, zur Verfügung zu stellen, die vor allem verbesserte Verarbeitbarkeit und höhere Bewitterungsstabilität aufweisen.

Die zugrunde liegende Aufgabe wird gelöst durch ein Beschichtungsstoff enthaltend eine zweikomponentige Zusammensetzung, seine Verwendung zur Herstellung einer Erosionsschutzbeschichtung und ein mit dieser Beschichtung versehenes Bauteil gemäß den vorliegenden Ansprüchen. Weitere Ausführungsformen werden in der Beschreibung und den Unteransprüchen offenbart.

Unter dem Begriff Beschichtungsstoff wird im Folgenden eine flüssige oder pastöse Zusammensetzung verstanden, welche nach ihrer Applikation auf ein Substrat durch Aushärten eine Beschichtung bildet. Der Aushärtungsprozess umfasst dabei sowohl das Trocknen durch Verdampfen der Lösemittel als auch die chemische Reaktion der Zusammensetzungsbestandteile.

Die erfindungsgemäße Beschichtungsstoffzusammensetzung umfasst zwei Komponenten, eine Stamm- und eine Härterkomponente. Die Stammkomponente enthält zumindest ein trifunktionelles Polycaprolactonpolyol oder zumindest ein Polycarbonatdiol oder zumindest ein Polycaprolactonpolyol und ein Polycarbonatdiol. Die Stammkomponente weist einen OH-Gehalt zwischen 0,55 und 1,75 mol/kg, bevorzugt zwischen 0,8 und 1,5 mol/kg, besonders bevorzugt ca. 1,15 mol/kg, auf.

Um neben der Erosionsbeständigkeit auch gute Bewitterungsbeständigkeit zu erhalten, sind die physikalisch-chemischen Eigenschaften der eingesetzten Polycaprolactonpolyole und Polycarboantdiole wichtig. Erfindungsgemäß geeignete Polycaprolactonpolyole weisen eine Funktionalität von größer gleich 2, bevorzugt größer gleich 3, auf, wobei die Funktionalität die Zahl der kovalenten Bindungen angibt, die ein Molekül mit anderen Reaktanden bilden kann. Die Polycaprolactonpolyole zeigen mittlere Molmassen bezogen auf das Zahlenmittel (im Folgenden als mittlere Molmasse bezeichnet) im Bereich von 250 bis 2000 g/mol, bevorzugt von 300 bis 1500 g/mol, besonders bevorzugt von 330 bis 1000 g/mol. Weiterhin weisen sie Hydroxylzahlen im Bereich von 150 bis 650 mg KOH/g, bevorzugt von 160 bis 620 mg KOH/g, besonders bevorzugt von 170 bis 590 mg KOH/g, auf. Im Folgenden gibt die Hydroxylzahl die Menge Kaliumhydroxid in Milligramm an, welche der bei einer Acetylierung von einem Gramm Substanz gebundenen Menge Essigsäure gleichwertig ist.

Erfindungsgemäß geeignete Polycarbonatdiole zeigen mittlere Molmassen im Bereich von 300 bis 3000 g/mol, bevorzugt von 350 bis 2000 g/mol, besonders bevorzugt von 400 bis 1000 g/mol. Weiterhin weisen sie Hydroxylzahlen im Bereich von 35 bis 300 mg KOH/g, bevorzugt von 50 bis 280 mg KOH/g, besonders bevorzugt von 75 bis 250 mg KOH/g, auf.

Weiterhin enthält die Stammkomponente zumindest einen Polyasparaginsäureester. Erfindungsgemäß bevorzugt weist die Stammkomponente einen NH-Gehalt zwischen 0,42 bis 1,25 mol/kg, besonders bevorzugt zwischen 0,6 und 1,0 mol/kg, ganz besonders bevorzugt ca. 0,85 mol/kg auf.

Der Einsatz vom Polyasparaginsäurestern in Beschichtungsstoff-Komponenten ist bekannt. Die eingesetzten Polyasparaginsäureester sind Polyamine mit sekundären Aminogruppen, insbesondere mit zwei sekundären Aminogruppen. Die Komponenten können nach bekannten und dem Fachmann geläufigen Herstellungsverfahren erhalten werden, z.B. durch Addition von primären, bevorzugt aliphatischen, Diaminen an Maleinsäuredialkylester oder Fumarsäuredialkylester oder durch Addition von primären, bevorzugt aliphatischen, Aminen an ungesättigte Polyester. Die Alkylreste können dabei lineare, verzweigte oder cyclische Alkylgruppen sein.

Geeignete Polyasparaginsäureester werden durch die folgende Formel (I) beschrieben. 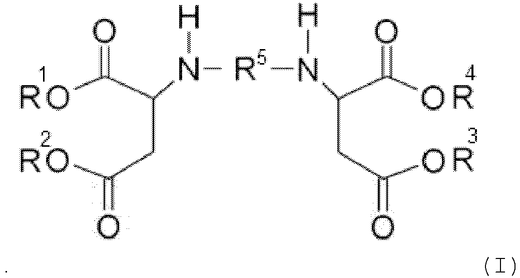 wobei R1, R2, R3 und R4 unabhängig voneinander für Alkylreste mit 1 bis 12 Kohlenstoffatomen, bevorzugt 1 bis 4 Kohlenstoffatomen, stehen und R5 für einen zweibindigen Alkylenrest mit 6 bis 24 Kohlenstoffatomen, bevorzugt 6 bis 16 Kohlenstoffatomen steht.

Erfindungsgemäß bevorzugt werden nicht aromatische, aliphatische, besonders bevorzugt gesättigte, Polyasparaginsäureester eingesetzt.

In besonders bevorzugten Ausführungsformen sind die Reste R1, R2, R3 und R4 Ethylreste. Besonders bevorzugte Alkylenreste R5 sind Reste der Formel (II), (III) oder (IV).

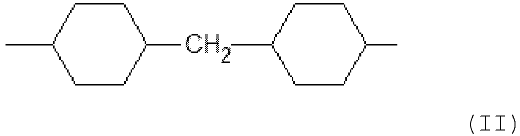

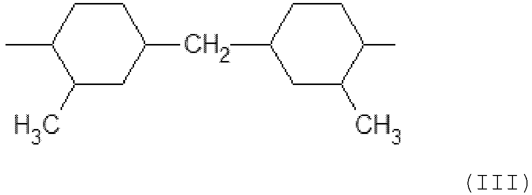

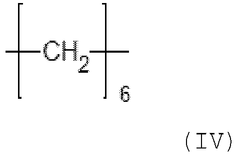

Geeignete Polyasparaginsäureester werden beispielsweise unter der Handelsnamen Desmophen NH von der Firma Covestro Deutschland AG (Leverkusen, Deutschland) angeboten.

Die erfindungsgemäß eingesetzten Polyasparaginsäureester weisen eine Aminzahl von 120 bis 300 mg KOH/g, bevorzugt 140 bis 260 mg KOH/g, auf, wobei die Aminzahl die Menge KOH in Milligramm angibt, welche dem Aminanteil von 1 g Substanz gleichgesetzt ist. Die Aminzahl wird durch potentiometrische Titration bestimmt.

Das Massenverhältnis von Polyolen zu Aminen liegt zwischen 0,1 : 1 und 5 : 1, bevorzugt zwischen 0,5 : 1 und 2 : 1, besonders bevorzugt zwischen 0,8 : 1 und 1,2 : 1, ganz besonders bevorzugt zwischen 0,9 : 1 und 1,1 : 1, insbesondere bei ca. 1 : 1. Die erfindungsgemäße Kombination aus Polyolen und Aminen führt zu besonders langen Topfzeiten im Bereich zwischen 5 und 10 Minuten bei vergleichsweise kurzen Härtungszeiten im Bereich zwischen 2 und 4 Stunden bei einer Temperatur von 23°C.

Die Härterkomponente enthält zumindest ein kristallisationsbeständiges isocayanatfunktionelles Polyesterpräpolymer wie sie aus WO 2016/116376 bekannt sind. Diese Präpolymere sind HDI-Polyesterpräpolymere mit einem NCO-Gehalt von 2,8 bis 18,0 Gew.-% und einer mittleren Isocyanatfunktionalität von 1,9 bis 3,0. Diese werden erhalten durch Umsetzung von 1,5-Diisocyanatopentan und/oder 1,6-Diisocyanatohexan mit (A) mindestens einem Polyesterpolyol einer mittleren Funktionalität von 1,9 bis 2,3 und einer mittleren Molmasse von 300 bis 3000 g/mol, und mit (B) mindestens einen Polycaprolactonpolyester einer mittleren Funktionalität von 2,0 bis 3,0 und einer mittleren Molmasse von 176 bis 2000 g/mol, bei Temperaturen von 20 bis 200° C unter Einhaltung eines Äquivalentverhältnisses von Isocyanatgruppen zu Hydroxylgruppen von 4 : 1 bis 200 : 1. Dabei wird das Polyesterpolyol (A) hergestellt aus der Umsetzung von Bernsteinsäure, Bernsteinsäureanhydrid, Glutarsäure, Adipinsäure, Pimelinsäure, Korksäure, Azelainsäure, Sebacinsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure, Tetrahydrophthalsäureanhydrid oder deren Gemischen mit ein oder mehreren mehrfunktionellen Alkoholen mit einem Anteil verzweigter aliphatischer Diole von mindestens 30 Gew.-% bezogen auf die Gesamtmenge der eingesetzten mehrfunktionellen Alkohole

Der Anteil der Polyesterpolyole (A) an der in den Präpolymeren eingebauten Gesamtmenge an Polyesterkomponenten (A) und (B) beträgt zwischen 15 und 70 Gew.-%.

Geeignete mehrfunktionelle Alkohole sind beispielsweise 1,2-Ethandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,12-Dodecandiol, 1,2- und 1,4-Cyclohexandiol, 1,4-Cyclohexandimethanol, 4,4'-(1-Methylethyliden)-biscyclohexanol, 1,2,3-Propantriol (Glycerin), 1,1,1-Trimethylolethan, 1,2,6-Hexantriol, 1,1,1-Trimethylolpropan, 2,2-Bis(hydroxymethyl)-1,3-propandiol, niedermolekulare Polyetherdiole, wie z.B. Diethylenglykol und Dipropylenglykol, und verzweigte aliphatische Diole, wie z.B. 1,2-Propandiol, 1,3-Butandiol, 2-Methylpropandiol, 2,2-Dimethyl-1,3-propandiol (Neopentylglykol), 1,2-Hexandiol, 2-Methylpentan-2,4-diol, 3-Methyl-1,5-pentandiol, 2-Ethyl-1,3-hexandiol, 1,2-Octandiol, 2,2,4-Trimethyl-1,5-pentandiol, 2-Butyl-2-ethyl-1,3-propandiol, 2,2,4- und/oder 2,4,4-Trimethylhexandiol, 1,2-Decandiol sowie deren Gemische. Die mehrfunktionellen Alkohole weisen dabei einen Anteil an verzweigten aliphatischen Diolen von mindestens 30 Gew.-% bezogen auf die Gesamtmenge an eingesetzten mehrfunktionellen Alkoholen auf.

Bevorzugte Polyesterpolyole (A) sind solche auf Basis von Bernsteinsäure und/oder Adipinsäure umgesetzt mit 1,2-Ethandiol, 1,4-Butandiol, 1,6-Hexandiol, Glycerin, 1,1,1-Trimethylolpropan, sowie den verzweigten aliphatischen Diolen 1,3-Butandiol, Neopentylglykol, 2-Butyl-2-ethyl-1,3-propandiol, 2,2,4-Trimethyl-1,5-pentandiol und 2,2,4- und/oder 2,4,4-Trimethylhexandiol, wobei der Anteil an verzweigten aliphatischen Diolen an der Gesamtmenge an eingesetzten mehrfunktionellen Alkoholen mindestens 30 Gew.-% beträgt.

Die eingesetzten Polyesterpolyole (B) bestehen aus mindestens einem Polyesterpolyol einer mittleren Funktionalität von 2,0 bis 3,0 und einem zahlenmittleren Molekulargewicht von 176 bis 2200 g/mol, wie es in an sich bekannter Weise aus ε-Caprolacton und einfachen mehrwertigen Alkoholen als Startermolekülen unter Ringöffnung erhalten wird. Als Startermoleküle für die ringöffnende Polymerisation können beispielsweise die oben als geeignete Ausgangsverbindungen zur Herstellung der Polyesterpolyole (A) beispielhaft genannten di- oder trifunktionellen Alkohole oder beliebige Gemische dieser Alkohole dienen. Die Herstellung der ε-Caprolactonpolyesterpolyole (B) durch ringöffnende Polymerisation erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C. Bevorzugte Polyesterpolyole (B) sind solche, die unter Verwendung von 1,4-Butandiol, Diethylenglykol, Neopentylglykol, 1,6-Hexandiol, Glycerin und/oder 1,1,1-Trimethylolpropan als Startermolekül hergestellt wurden.

Geeignete kristallisationsbeständige, isocayanatfunktionelle Präpolymere weisen eine dynamische Viskosität von 800 bis 2500 mPas, bevorzugt von 1000 bis 2000 mPas, besonders bevorzugt von 1200 bis 1800 mPas, auf, wobei die Viskosität als Scherviskosität mit einer Scherrate von 100/s bei 25 °C in entsprechenden handelsüblichen Viskosimetern oder Rheometern bestimmt wird. Weiterhin weisen die kristallisationsbeständigen, isocyanatfunktionellen Präpolymere NCO-Gehalte von 1,5 bis 6 mol/kg, bevorzugt 1,8 bis 5,5 mol/kg, besonders bevorzugt 1,9 bis 3,5 mol/kg, ganz besonders bevorzugt 2 bis 3 mol/kg, auf.

In einer bevorzugten Ausführungsform der Erfindung enthält die Härterkomponente weitere HDI- und/oder PDI-Oligomere wie Uretdion, Isocyanurate, Allophanate, Biurete und Iminooxadiazindione. Bevorzugte Oligomere sind Uretdione und/oder Isocyanurate.

Aus der erfindungsgemäßen Beschichtungsstoffzusammensetzung werden Beschichtungen erhalten, deren Erosionsschutzeigenschaften durch die in der Formulierung enthaltenen Feststoffe wie Pigmente und Füllstoffe nicht beeinträchtigt sind. Damit sind Erosionsschutz-Beschichtungen mit den unterschiedlichsten Pigmentierungen und in den gewünschten Farbtönen möglich. Weiterhin hat sich gezeigt, dass den erfindungsgemäßen Beschichtungsstoffzusammensetzungen feste Hilfsstoffe wie Molekularsieb zugesetzt werden können, ohne dass die Erosionsstabilität beeinträchtigt wird. Es wird vielmehr eine Verbesserung der Erosionsstabilität im Vergleich zu den bekannten Formulierungen beobachtet. Ein Einsatz von Molekularsieb, das üblicherweise bei Polyurethan-Systemen (PUR-Systemen) als Wasserfänger eingesetzt wird, verbessert die Verarbeitungseigenschaften der Beschichtungsstoffzusammensetzung. Die erfindungsgemäßen Zusammensetzungen können daher bei hoher Luftfeuchtigkeit und auch bei Regen ohne Verschlechterung der Eigenschaften der ausgehärteten Beschichtung verarbeitet werden.

Aus den erfindungsgemäßen Beschichtungsstoffzusammensetzungen werden Beschichtungen erhalten, welche hoch bewitterungsstabil, insbesondere wenig bis nicht wasserempfindlich sind. Sie sind darüber hinaus temperaturbeständig und erweichen nicht bei höheren Temperaturen bis zu 80°C wie sie ohne Weiteres im Betrieb einer Windkraftanlage auf den Oberflächen der Rotorblätter erreicht werden.

In einer vorteilhaften Ausführungsform der vorliegenden Erfindung werden die Stammkomponente und die Härterkomponente in einem volumetrischen Mischungsverhältnis zwischen 10 : 1 bis 0,1 : 1, besser 5 : 1 bis 0,2 : 1, bevorzugt 4 : 1 bis 0,25 : 1, besonders bevorzugt 2 : 1 bis 0,5 : 1, ganz besonders bevorzugt bei etwa 1 : 1, eingesetzt. Da Materialströme gleichen Volumens besonders gut miteinander vermischt werden können, können die Beschichtungsstoffe besonders einfach aus Kartuschen verarbeitet werden. Eine homogene Vermischung ist wichtig für eine gleichmäßige Aushärtung des Beschichtungsstoffs und damit für die gleichmäßige Ausbildung der Eigenschaften der Beschichtung.

In einer weiteren erfindungsgemäßen Ausführungsform liegt das molare Verhältnis von der Summe der NH- und OH-Gruppen der Stammkomponente zu den Isocyanatgruppen der Härterkomponente [OH+NH] : NCO im Bereich von 1 : 0,5 bis 1 : 2, bevorzugt 1 : 0,7 bis 1 : 1,3, besonders bevorzugt 1 : 0,8 bis 1 : 1,2. Gemäß einer besonders bevorzugten Ausführungsform liegt das Verhältnis [OH+NH] : NCO nahe einem stöchiometrischen molaren Verhältnis von 1 : 1, d. h. im Bereich von 1 : 0,9 bis 1 : 1,1, bevorzugt 1 : 0,95 bis 1 : 1,05, besonders bevorzugt bei etwa 1 : 1. In der besonders bevorzugten Ausführungsform werden die relativen Mengen Stammkomponente und Härterkomponente so gewählt, dass das molare Verhältnis der Summe von Hydroxyl- und NH-Gruppen zu Isocyanatgruppen annähernd äquimolar ist.

Die Variation des Massenverhältnisses von Polycaprolacton-Polyolen mit niedriger Molmasse zu Polycaprolacton-Polyolen mit höherer Molmasse in der Stammkomponente ermöglicht es, in einfacher Weise das volumetrische Mischungsverhältnis unter Beibehaltung des gewünschten molaren [OH+NH] : NCO Verhältnisses von Härter- und Stammkomponente auf den bevorzugten Wert von etwa 1 : 1 einzustellen.

In einer weiteren Ausführungsform können die erfindungsgemäßen Beschichtungsstoffe Pigmente enthalten. Geeignete Pigmente sind die bekannten und dem Fachmann geläufigen organischen Pigmente wie zum Beispiel Arylamidgelb, Diarylidgelb, Nickelazogelb, Anthrapyrimidingelb, Pyranthrongelb, Isoindolinongelb, Arylamidorange, Diarylidorange, Azokondensationsorange, Anthanthronorange, Pyrenthronorange, Trans-Perinonorange, Chinacridonorange, Isoindolinonorange, Toluidinrot, Litholrot, Naphthol-AS-Rot, Azokondensationsrot, Perylenrot, Thioindigorot, Chinacridonrot, Isoindolinonrot, Isoviolanthronviolett, Indanthrenviolett, Chinacridonviolett, Dioxazinviolett, Phthalocyaninblau, Indanthrenblau, Phthalocyaningrün, Knochenschwarz und Anilinschwarz. Erfindungsgemäß geeignet sind weiterhin die bekannten und dem Fachmann geläufigen anorganischen Pigmente wie zum Beispiel Titandioxid, Zinksulfid, Lithopone, Zinkoxid, Antimonoxid, Eisenoxidgelb, Nickeltitangelb, Molybdatorange, Eisenoxidrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß und Acetylenruß. Bevorzugt werden anorganische Pigmente eingesetzt, insbesondere Titandioxid, Zinksulfid, Lithopone, Zinkoxid, Antimonoxid, Eisenoxidgelb, Nickeltitangelb, Molybdatorange, Eisenoxidrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß und Acetylenruß. Ganz besonders bevorzugte Pigmente sind Titandioxid, Zinksulfid, Lithopone, Zinkoxid, Eisenoxidrot, Kupferoxid, Molybdatrot, Ultramarinrot, Mischphasenrot, Eisenoxidschwarz, Gasruß, Thermalruß, Ofenruß, Flammruß und Acetylenruß. Die Pigmente werden eingesetzt in Mengen zwischen 0 und 35 Gew.-%, bevorzugt zwischen 1 und 25 Gew.-%, besonders bevorzugt zwischen 1,5 und 15 Gew.-%, ganz besonders bevorzugt zwischen 2 und 10 Gew.-%, bezogen auf die Gesamtmasse des Beschichtungsstoffs.

In einer weiteren Ausführungsform können die erfindungsgemäßen Beschichtungsstoffe Füllstoffe enthalten. Füllstoffe sind unterschiedliche Substanzen, die zum Erreichen bestimmter physikalischer Eigenschaften der Beschichtungsstoffe eingesetzt werden und im jeweiligen Anwendungsmedium unlöslich sind. Füllstoffe werden beispielsweise in körniger Form oder in Pulverform eingesetzt. Bevorzugte Füllstoffe sind anorganische Füllstoffe insbesondere Carbonate wie Calciumcarbonat, Dolomit oder Bariumcarbonat, Sulfate wie Calciumsulfat und Bariumsulfat, Silikate und Schichtsilikate, wie Wollastonit, Talkum, Pyrophyllit, Glimmer, Kaolin, Feldspat, gefällte Calcium-, Aluminium-, Calcium-/Aluminium-, Natrium-/Aluminium-Silikate und Mullit, Wollastonit, Siliciumdioxid, Quarz und Cristobalit. Im Rahmen der vorliegenden Erfindung werden Siliciumdioxide der Gruppe der Silikate untergeordnet. Weitere anorganische Füllstoffe sind gefällte Kieselsäuren oder pyrogene Kieselsäuren sowie Metalloxide wie Aluminium- und Magnesiumhydroxid. In einer weiteren erfindungsgemäßen Ausführungsform können die Beschichtungsstoffe Füllstoffe in Mengen von bis zu 45 Gew.-%, bevorzugt 0,1 bis 40 Gew.-%, besonders bevorzugt 1 bis 30 Gew.-%, ganz besonders bevorzugt 5 bis 25 Gew.-%, jeweils bezogen auf die Gesamtmasse des Beschichtungsstoffs enthalten.

Bevorzugte anorganische Füllstoffe sind nadelförmige Füllstoffe und Silikate, bevorzugt nadelförmige Silikate, insbesondere Wollastonit. Wollastonit ist bekanntermaßen eine gängige Bezeichnung für Calciummetasilikat, wobei im natürlich vorkommenden Wollastonit bis zu 2 Gew.-% der Calciumionen durch Magnesium-, Eisen- und/oder Manganionen ersetzt sein können. Wollastonit wird bevorzugt eingesetzt in Mengen von 0,1 bis 25 Gew.-%, besonders bevorzugt von 5 bis 20 Gew.-%, ganz besonders bevorzugt von 10 bis 15 Gew.-%, jeweils bezogen auf die Gesamtmasse des Beschichtungsstoff.

In einer weiteren bevorzugten Ausführungsform enthalten die erfindungsgemäßen Beschichtungszusammensetzungen Molekularsieb. Molekularsieb sind natürliche oder synthetische Zeolithe mit einer relativ großen inneren Oberfläche und einheitlichen Porendurchmessern. Aus dieser Struktur ergibt sich ein relativ starkes Adsorptionsvermögen. Sie werden daher unter anderem als Adsorbentien beispielsweise als Wasserfänger eingesetzt. Erfindungsgemäß geeignetes Molekularsieb weist eine Porengröße von 2 bis 10 Angström, bevorzugt 2,5 bis 4 Angström, besonders bevorzugt ca. 3 Angström, auf. Die erfindungsgemäßen Beschichtungsstoffzusammensetzungen enthalten Molekularsieb in Mengen von 0,1 bis 15 Gew.-%, bevorzugt 1 bis 10 Gew.-%, besonders bevorzugt 2 bis 8 Gew.-%, jeweils bezogen auf die Gesamtmasse des Beschichtungsstoffs.

Die in den erfindungsgemäßen Beschichtungsstoffzusammensetzungen eingesetzten Pigmente und Füllstoffe müssen nicht zwingend oberflächenbehandelt sein, es können auch unbehandelte Feststoffe eingesetzt werden.

In einer weiteren Ausführungsform weist der erfindungsgemäße Beschichtungsstoff einen Füllgrad im Bereich zwischen 5 und 50 % auf. Unter dem Begriff Füllgrad wird im Folgenden der prozentuale Massenanteil der unlöslichen festen Stoffe, die in der ungehärteten Beschichtungsstoffzusammensetzung vorliegen, bezogen auf die Gesamtmasse der Beschichtungsstoffzusammensetzung verstanden. Bevorzugt weist der Beschichtungsstoff einen Füllgrad im Bereich zwischen 10 und 40 %, besonders bevorzugt zwischen 15 und 35 %, ganz besonders bevorzugt zwischen 20 und 30 %, auf. Besonders vorteilhaft ist ein Füllgrad von etwa 25 %.

In einer weiteren bevorzugten Ausführungsform der erfindungsgemäßen Beschichtungsstoffzusammensetzung können Lichtschutzmittel in Mengen von bis zu 10 Gew.-%, bevorzugt 0,5 bis 5 Gew.-%, besonders bevorzugt 1 bis 3 Gew.-%, jeweils bezogen auf die Gesamtmasse des Beschichtungsstoffes eingesetzt werden. Geeignete Lichtschutzmittel sind beispielsweise UV-Absorber und Radikalfänger wie z.B. substituierte 2,2,6,6-Tetramethylpiperidine, 2-Hydroxyphenyltriazine, 2-Hydroxybenzophenone und deren Gemische.

Die erfindungsgemäße Beschichtungsstoffzusammensetzung kann weiterhin Katalysatoren für die Katalyse der Reaktion von Hydroxylgruppen und Aminogruppen mit Isocyanatgruppen enthalten.

Vorzugsweise enthält die Zusammensetzung mindestens einen Katalysator in Mengen von 0,01 bis 2 Gew.- %, besonders bevorzugt 0,02 bis 1 Gew.-%, jeweils bezogen auf das Gesamtgewicht der Zusammensetzung. Geeignete Katalysatoren sind die bekannten Metallkatalysatoren wie beispielsweise Zinn-, Molybdän-, Zirkon- oder Zinkkatalysatoren sowie tertiäre Amine. Besonders geeignete Katalysatoren sind Molybdän-, Zirkon- oder Zinkkatalysatoren.

Weiterhin können die erfindungsgemäßen Beschichtungsstoffzusammensetzungen die üblichen und dem Fachmann geläufigen Hilfsstoffe und Additive aufweisen wie beispielsweise Netzmittel, Rheologieadditive oder Haftvermittler, verlaufsverbessernde Additive, Entschäumer und Entlüfter. Die Additive und Hilfsstoffe können dabei in Mengen vom 0,1 bis 15 Gew.-%, bevorzugt 0,2 bis 10 Gew.-%, besonders bevorzugt 0,3 bis 8 Gew.-%, jeweils bezogen auf die Gesamtmasse des Beschichtungsstoffs eingesetzt werden.

In einer bevorzugten Ausausführungsform werden die Komponenten der Beschichtungsstoffzusammensetzung lösemittelfrei formuliert. Alternativ können Stamm- und Härter-Komponente aber auch mit den lacküblichen Lösemitteln verdünnt werden. Besonders geeignet sind aprotische Lösemittel, wobei unter diesem Begriff im Folgenden Lösemittel verstanden werden, die kein ionisierbares Proton im Molekül enthalten. Erfindungsgemäß geeignet sind beispielsweise aliphatische Kohlenwasserstoffe, cycloaliphatische Kohlenwasserstoffe, aromatische Kohlenwasserstoffe, Ketone, Ester, Ether, Etherester insbesondere Ethylacetat, Butylacetat, Aceton, n-Butanon, Methylisobutylketon, Methoxypropylacetat sowie Xylol. Bevorzugt eingesetzte Lösungsmittel sind Ethylacetat, Butylacetat, Aceton, n-Butanon, Methylisobutylketon, Methoxypropylacetat und deren Gemische.

Die oben genannten Pigmente, Füllstoffe, Molekularsieb, Additive und Lösemittel können sowohl in der Stammkomponente als auch in der Härterkomponente der Beschichtungsstoffzusammensetzungen eingesetzt werden. Erfindungsgemäß bevorzugt werden die Feststoffe insbesondere Pigmente, Füllstoffe und Molekularsieb in der Stammkomponente eingesetzt.

Nach dem Vermischen seiner Stamm- und Härterkomponente weist der erfindungsgemäße Beschichtungsstoff nach der Applikation auf eine senkrecht stehende Fläche eine Ablaufsicherheit von größer als 400pm auf.

### Beispiele

Tabelle 1 zeigt die Zusammensetzungen von Beschichtungsstoffen in den erfindungsgemäßen Beispielen E1 bis E6 und den Vergleichsbeispielen V1 bis V4, wobei die eingesetzten Mengen in Gewichtsteilen angegeben werden.

**Tabelle 1**

| | E1 | E2 | E3 | E4 | E5 | E6 | V1 | V2 | V3 | V4 |
|---|---|---|---|---|---|---|---|---|---|---|
| **Stammkomponente** | | | | | | | | | | |
| Capa 3091 | 15 | | 30 | | 15 | 15 | 15 | 15 | 15 | 15 |
| Ethernacoll PH50 | | 15 | | 30 | | | | | | |
| Desmodur NH 1420 | 15 | 15 | | | 15 | 15 | 15 | 15 | 15 | 15 |
| Kronos 2310 | 10 | 10 | 10 | 10 | 10 | 10 | 10 | 10 | 10 | 10 |
| Tremin 939 | 10 | 10 | 10 | 10 | 10 | 10 | 10 | 10 | 10 | 10 |
| Sylosiv A3 | 5 | 5 | 5 | 5 | 5 | 5 | 5 | 5 | 5 | 5 |
| | | | | | | | | | | |

| **Härterkomponente** | | | | | | | | | | |
|---|---|---|---|---|---|---|---|---|---|---|
| Härter 1 | 47,4 | 52,5 | 45,1 | 55,3 | | | | | | |
| Härter-Gemisch 2 | | | | | 36,3 | | | | | |
| Härter-Gemisch 3 | | | | | | 39,2 | | | | |
| Desmodur N 3800 | | | | | | | 39,2 | | | |
| Adiprene LFH2840 | | | | | | | | 51,4 | | |
| Desmudur N 3600 | | | | | | | | | 18,8 | |
| Desmodur N 3400 | | | | | | | | | | 19,8 |

### Eingesetzte Rohstoffe:

Die in der Härterkomponente eingesetzten kristallisationsbeständigen isocyanatfunktionellen Präpolymere werden in Offenlegungsschrift WO 2016/116376 beschrieben.
Härter 1:
   entspricht dem in Beispiel 1 der WO2016/116376 beschriebenen kristallisationsbeständigen Präpolymer, das hergestellt wird durch die Umsetzung von Hexamethylendiisocyanat (HDI) mit einem Polyesterpolyolgemisch aus dem Umsetzungsprodukt von Neopentylglykol, 1,4-Butandiol, 1,6-Hexandiol, 2,2,4-Trimethyl-1,3-pentandiol, 2-Butyl-2-ethyl-1,3-propandiol mit Adipinsäure sowie Diethylenglykol und Glycerin gestartete ε-Caprolacton-Polyester.
Härter-Gemisch 2:
   entspricht der im Beispiel 18 der WO2016/116376 beschriebenen Mischung aus 80 Gewichtsteilen Härter 1 und 20 Gewichtsteilen Desmodur N3600
Härter-Gemisch 3:
   entspricht der im Beispiel 19 der WO2016/116376 beschriebenen Mischung aus 85 Gewichtsteilen Härter 1 und 15 Gewichtsteilen Desmodur N3400
Desmodur N 3400 (Covestro Deutschland AG):
   niedrigviskoses Uretdiongruppen enthaltendes HDI-Polyisocyanat (Lieferform 100 %, NC O- Gehalt: 21,8 %, Äquivalentgewicht: 193 g/val NCO, Viskosität (23°C): 175 mPas)
Desmodur N3600 (Covestro Deutschland AG):
   niedrigviskoses HDI-Trimerisat (Lieferform 100 %, NCO-Gehalt: 23,0 %, Äquivalentgewicht: 183 g/val NCO, Viskosität: (23°C) 1200 mPas)
Desmodur N 3800 (Covestro Deutschland AG):
   isocyanatterminiertes HDI-Isocyanurat-Polycaprolacton-Präpolymer (Lieferform 100 %, NCO- Gehalt: 11,0 %, Äquivalentgewicht: 382 g/val NCO, Viskosität (23°C): 6000 mPas)
Adiprene LFH 2840 (Chemtura Corp.):
   isocyanatterminiertes HDI-Polycaprolacton-Präpolymer (Lieferform 100 %, NCO- Gehalt: 8,4 %, Äquivalentgewicht: 500 g/val NCO, Viskosität (22°C): 1890 mPas)
Desmophen NH 1420 (Covestro Deutschland AG):
   Polyasparaginsäureester, difunktionell (Lieferform 100 %, Äquivalentgewicht: 276 g/val NH)
Capa 3031 (Perstorp Holding AB):
   Polycaprolactonpolyol, trifunktionell (Lieferform 100 %, OH-Gehalt: 5,56 %, Äquivalentgewicht: ca. 300 g/val OH)
Ethernacoll PH 50 (UBE Chemical Europe SA):
   Polycarbonatpolyol difunktionell (Lieferform 100 %, OH-Gehalt: 6,8 %, Äquivalentgewicht: ca. 250 g/val OH)
Sylosiv A3 (Grace GmbH & Co. KG):
   Molekularsieb 3A
Kronos 2310 (Kronos Titan GmbH):
   Titandioxid-Pigment
Tremin 939 (Quarzwerke Frechen):
   Wollastonit, Partikel-Länge zu Partikel-Durchmesser: ca. 8:1

Die Stammkomponenten und Härterkomponenten wurden durch Zusammengeben der jeweiligen Bestandteile und homogene Vermischung in einem Dissolver hergestellt.

### 2. Tests

Zur Bewertung der ausgehärteten Beschichtungen werden an Probekörpern, welche mit Beschichtungsstoffen der Beispiele E1 bis E6 sowie der Vergleichsbeispiele V1 bis V4 beschichtet wurden, Tests zur Erosionsstabilität und zur Bewitterungsbeständigkeit durchgeführt. Zur Herstellung der Probekörper werden die Stamm- und die Härterkomponente einer Beipielzusammensetzung homogen vermischt. Dabei wurden die Mengen Stammkomponente und Härterkomponente so gewählt, dass das molare Verhältnis der Summe von Hydroxyl- und NH-gruppen zu Isocyanatgruppen bei etwa 1 : 1 liegt. Der so erhaltene Beschichtungsstoff wird auf einen Probekörper appliziert. Die Probekörper bestehen aus üblichen glasfaserverstärkten Epoxidharzsubstraten, welche mit bekannten polyharnstoffbasierten Porenfüllern vorbeschichtet sind. Der aufgetragene Beschichtungsstoff wird über einen Zeitraum von 14 Tagen bei einer Temperatur zwischen 20 bis 25 °C und einer relativen Feuchte von 50 % ausgehärtet. Die erhaltene Trockenschichtdicke beträgt 400 pm.

### 2.1. Testmethoden

Zur Bewertung der Erosionsstabilität werden die beschichteten Probekörper einem Regenerosionstest ausgesetzt. Hier wurde ein hauseigener Prüfstand eingesetzt. Dazu wird der Probekörper am einem Rotor befestigt. Der Rotor bewegt sich mit einer definierten Tangentialgeschwindigkeit zwischen 94 m/s an dem der der Rotationsachse des Rotors zugewandten Ende des Probekörpers bis 157 m/s am der Rotationsachse abgewandten Ende des Probekörpers durch ein Regenfeld, welches Regen simuliert. Ein übliches Prüfszenario, welches beispielsweise im Bereich der Windenergie verwendet wird, arbeitet bei Geschwindigkeiten von 140 m/s und einer Regenintensität von 30 mm/h. Die Regenintensität ist definiert als das Volumen der Regenmenge, die pro Zeiteinheit und pro Flächeneinheit fällt. Üblicherweise ist die Regenintensität während der Prüfung umgekehrt proportional zur Prüfdauer. Um die Prüfzeiten zu verkürzen, wurde hier bei einer Geschwindigkeit von 140 m/s eine höhere Regenintensität gewählt.

Die Durchflussrate des Wassers wird konstant gehalten und entspricht auf der vom Probekörper während der Rotationsbewegung bestrichenen Fläche einer Niederschlagsmenge von 475 mm/h, die durchschnittliche Tropfengröße beträgt 2 bis 3 mm. Die Probekörper werden bei einer Temperatur zwischen 20 und 25 °C solange dem simulierten Regen ausgesetzt bis das Substrat des Probekörpers sichtbar wird. Dazu werden die Probekörper in Zeitabständen von 15 Minuten visuell bewertet.

Zur Bewertung der Bewitterungsstabilität werden die Probekörper einer künstlichen Bewitterung ausgesetzt, welche durch die zyklische Anwendung von Strahlung, Feuchtigkeit und erhöhter Temperatur eine Freibewitterung simuliert. Dazu wird der Prüfzyklus aus Trocknungsphase und Kondensationsphase 1500 Stunden lang wiederholt. In der Trocknungsphase des Prüfzyklus werden die Probekörper 4 Stunden mit einer QUV-B Lampe (Emmissionsmaximum bei 313 nm) bei 60°C Schwarztafeltemperatur bestrahlt. In der anschließenden 4 stündigen Kondensationsphase im Wasserdampf kondensiert bei 50°C Schwarztafeltemperatur der Wasserdampf auf den Probekörpern.

Zur Auswertung der Tests werden die Probekörper visuell begutachtet nach folgenden Kriterien bewertet:
- sehr gut: keine sichtbare Änderung
- gut: geringfügige Quellung, keine merkliche Erweichung
- schlecht: deutliche Quellung oder Erweichung, noch kein Ablaufen vom Probekörper
- sehr schlecht: deutliche Erweichung oder Quellung mit Ablaufen vom Probekörper

### 2.2. Ergebnisse

Tabelle 2 zeigt die Ergebnisse der erfindungsgemäßen Beispiele.

**Tabelle 2**

| | E1 | E2 | E3 | E4 | E5 | E6 |
|---|---|---|---|---|---|---|
| Regenerosions-beständigkeit in Minuten | 480 | 515 | 450 | 480 | 420 | 420 |
| Bewitterungsbeständigkeit | sehr gut | sehr gut | sehr gut | gut | sehr gut | gut |

Tabelle 3 die Ergebnisse der Vergleichsbeispiele.

**Tabelle 3**

| | V1 | V2 | V3 | V4 |
|---|---|---|---|---|
| Regenerosions-beständigkeit in Minuten | 60 | 75 | 15 | 30 |
| Bewitterungsbeständigkeit | schlecht | sehr schlecht | gut | schlecht |

Die Regenerosions-Beständigkeit und die Bewitterungsstabilität der erfindungsgemäßen Beschichtungen in Beispielen E1 bis E6 ist deutlich höher als bei den Vergleichsbeispielen V1 bis V4.

## Patentansprüche

1. Zusammensetzung zur Herstellung einer Erosionsschutzbeschichtung umfassend eine Stamm- und eine Härterkomponente, wobei die Stammkomponente zumindest ein trifunktionelles Polycaprolactonpolyol oder zumindest ein Polycarbonatdiol oder zumindest ein trifunktionelles Polycaprolactonpolyol und ein Polycarbonatdiol aufweist, und wobei die Härterkomponente zumindest ein kristallisationsbeständiges isocayanatfunktionelles Präpolymer aufweist hergestellt durch die Umsetzung von 1,5-Diisocyanatopentan und/oder 1,6-Diisocyanatohexan mit (A) mindestens einem Polyesterpolyol einer mittleren Funktionalität von 1,9 bis 2,3 und einer mittleren Molmasse von 300 bis 3000 g/mol, und mit (B) mindestens einem Polycaprolactonpolyester einer mittleren Funktionalität von 2,0 bis 3,0 und einer mittleren Molmasse von 176 bis 2000 g/mol,
wobei die Polyesterpolyole (A) aus der Umsetzung von Bernsteinsäure, Bernsteinsäureanhydrid, Glutarsäure, Adipinsäure, Pimelinsäure, Korksäure, Azelainsäure, Sebacinsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure, Tetrahydrophthalsäureanhydrid oder deren Gemischen mit ein oder mehreren mehrfunktionellen Alkoholen mit einem Anteil verzweigter aliphatischer Diole von mindestens 30 Gew.-% bezogen auf die Gesamtmenge der eingesetzten mehrfunktionellen Alkohole, wobei die Stammkomponente zumindest einen Polyasparaginsäureester aufweist.

2. Zusammensetzung nach Anpruch 1, **dadurch gekennzeichnet, dass** die Stammkomponente einen OH-Gehalt zwischen 0,55 und 1,75 mol/kg (ca. 1,15 mol/kg) aufweist.

3. Zusammensetzung nach einem der voranstehenden Ansprüche, **dadurch gekennzeichnet, dass** die Stammkomponente einen NH-Gehalt zwischen 0,42 bis 1,25 mol/kg (ca. 0,83 mol/kg) aufweist.

4. Zusammensetzung nach einem der voranstehenden Ansprüche, **dadurch gekennzeichnet, dass** die Stammkomponente ein Massenverhältnis von Polyasparaginsäureester zu Polyol von 0,8 : 1 bis 1 : 1,2 aufweist.

5. Zusammensetzung nach einem der voranstehenden Ansprüche, **dadurch gekennzeichnet, dass** die Polyesterpolyole (A) hergestellt sind durch die Umsetzung der Dicarbonsäuren oder Anhydride mit mehrwertigen aliphatischen oder cycloaliphatischen Alkoholen mit 2 bis 18 Kohlenstoffatomen,
und die Polyesterpolyole (B) hergestellt sind durch ringöffnende Polymerisation von ε- Caprolactonen mit mehrfunktionellen aliphatischen oder cycloaliphatischen Alkoholen mit 2 bis 18 Kohlenstoffatomen als Startermolekülen.

6. Zusammensetzung nach einem der voranstehenden Ansprüche, **dadurch gekennzeichnet, dass** die Härterkomponente einen NCO-Gehalt NCO-Gehalte von 1,5 bis 6 mol/kg aufweist.

7. Zusammensetzung nach einem der voranstehenden Ansprüche, **dadurch gekennzeichnet, dass** der Härterkomponente weitere HDI- und/oder PDI-Oligomere enthält.

8. Zusammensetzung nach einem der voranstehenden Ansprüche, **dadurch gekennzeichnet, dass** volumetrische Mischungsverhältnis der Stammkomponente und der Härterkomponente zwischen 0,9 : 1 und 1 : 1,2 liegt.

9. Zusammensetzung nach einem der voranstehenden Ansprüche, **dadurch gekennzeichnet, dass** die Zusammensetzung weiterhin Pigmente und/oder Füllstoffe.

10. Zusammensetzung nach einem der voranstehenden Ansprüche, **dadurch gekennzeichnet, dass** die Zusammensetzung weiterhin Molekularsieb enthält.

11. Verwendung der Zusammensetzung nach einem der Ansprüche 1 bis 10 zur Herstellung einer Erosionsschutzbeschichtung.

12. Bauteil aufweisend eine Beschichtung hergestellt aus einem Beschichtungsstoff nach einem der Ansprüche 1 bis 10.

13. Bauteil nach Anspruch 12, **dadurch gekennzeichnet, dass** das Bauteil ein Rotorblatt einer Windkraftanlage oder eines Hubschraubers, ein Flugzeugfügel oder eine Schiffsschraube ist.

14. Bauteil nach Anspruch 12 oder 13, **dadurch gekennzeichnet, dass** die Beschichtung ein Kantenschutz ist.

## Claims

1. A composition for the production of an erosion protection coating comprising a binder component and a hardener component, with the binder component having at least one trifunctional polycaprolactone polyol or at least one polycarbonate diol or at least one trifunctional polycaprolactone polyol and one polycarbonate diol, and with the hardener component having at least one crystallization stable isocyanate-functional prepolymer obtained by reaction of 1,5-diisocyanatopentane and/or 1,6-diisocyanatohexane with (A) at least one polyester polyol of mean functionality from 1.9 to 2.3 and an average molar mass of 300 to 3000 g/mol, and with (B) at least one polycaprolactone polyester of mean functionality from 2.0 to 3.0 and an average molar mass of 176 to 2000 g/mol, with the polyester polyols (A) being obtained by reaction of succinic acid, succinic anhydride, glutaric acid, adipic acid, pimelic acid, suberic acid, azelaic acid, sebacic acid, maleic acid, maleic anhydride, fumaric acid, itaconic acid, itaconic anhydride, hexahydrophthalic acid, hexahydrophthalic anhydride, tetrahydrophthalic acid, tetrahydrophthalic anhydride or mixtures thereof with one or more polyfunctional alcohols having a content of branched aliphatic diols of at least 30 wt % based on the total amount of the employed polyfunctional alcohols, with the binder component having at least one polyaspartic acid ester.

2. The composition according to claim 1, **characterized in that** the binder component has an OH content of between 0.55 and 1.75 mol/kg (approx. 1.15 mol/kg).

3. The composition according to one of the preceding claims, **characterized in that** the binder component has an NH content of 0.42 to 1.25 mol/kg (approx. 0.83 mol/kg).

4. The composition according to one of the preceding claims, **characterized in that** the binder component has a mass ratio of polyaspartic acid esters to polyols of 0.8 : 1 to 1 : 1.2,

5. The composition according to one of the preceding claims, **characterized in that** the polyester polyols (A) are prepared by reaction of the dicarboxylic acids or anhydrides with polyhydric aliphatic or cycloaliphatic alcohols having 2 to 18 carbon atoms,
and that the polyester polyols (B) are prepared by ring-opening polymerization of ε-caprolactones with polyfunctional aliphatic or cycloaliphatic alcohols having 2 to 18 carbon atoms as starter molecules.

6. The composition according to one of the preceding claims, **characterized in that** the hardener component shows an NCO content from 1.5 to 6 mol/kg.

7. The composition according to one of the preceding claims, **characterized in that** the hardener component contains further HDI and/or PDI oligomers.

8. The composition according to one of the preceding claims, **characterized in that** the volumetric mixing ratio of the binder component and the hardener component lies between 0.9 . 1 and 1 . 1.2.

9. The composition according to one of the preceding claims, **characterized in that** the composition further contains pigments and/or fillers.

10. The composition according to one of the preceding claims, **characterized in that** the composition further contains molecular sieve.

11. Use of the composition according to any one of claims 1 to 10 for the production of an erosion protection coating.

12. A component having a coating produced from a coating material according to any one of claims 1 to 10.

13. The component according to claim 12, **characterized in that** the component is a rotor blade of a wind power plant or of a helicopter, an aircraft wing or a marine screw propeller.

14. The component according to claim 12 or 13, **characterized in that** the coating is an edge protection.

## Revendications

1. Une composition pour 1a préparation d'un revêtement anti-érosion comprenant un composant liant et un composant durcisseur, le composant liant présentant au moins un polyol de polycaprolactone trifonctionnel ou au moins un diol de polycarbonate ou au moins un polyol de polycaprolactone trifonctionnel et un diol de polycarbonate, et le composant durcisseur comprenant au moins un prépolymère à fonction isocyanate résistant à la cristallisation préparé par la réaction du 1,5-diisocyanatopentane et/ou du 1,6-diisocyanatohexane avec (A) au moins un polyol de polyester ayant une fonctionnalité moyenne de 1,9 à 2,3 et une masse molaire moyenne de 300 à 3000 g/mol, et avec (B) au moins un polyester de polycaprolactone ayant une fonctionnalité moyenne de 2,0 à 3,0 et une masse molaire moyenne de 176 à 2000 g/mol,
les polyols de polyester (A) étant obtenus par la réaction de l'acide succinique, de l'anhydride succinique, de l'acide glutarique, de l'acide adipique, de l'acide pimélique, de l'acide subérique, de l'acide azélaique, de l'acide sébacique, de l'acide maléique, de l'anhydride maléique, de l'acide fumarique, de l'acide itaconique, de l'anhydride itaconique, de l'acide hexahydrophtalique, de l'anhydride hexahydrophtalique, de l'acide tétrahydrophtalique, de l'anhydride tétrahydrophtalique ou de leurs mélanges avec un ou plusieurs alcools polyfonctionnels ayant une proportion de diols aliphatiques ramifiés d'au moins 30 % en poids par rapport à la quantité totale des alcools polyfonctionnels utilisés, le composant liant présentant au moins un ester d'acide polyaspartique.

2. La composition selon la revendication 1, **caractérisée en ce que** le composant liant a une teneur OH entre 0,55 et 1,75 mol/kg (environ 1,15 mol/kg).

3. La composition selon l'une des revendications précédentes, **caractérisée en ce que** le composant liant a une teneur NH entre 0,42 et 1,25 mol/kg (environ 0,83 mol/kg).

4. La composition selon l'une des revendications précédentes, **caractérisée en ce que** le composant liant a un rapport de masse de l'ester d'acide polyaspartique au polyol de 0,8 : 1 à 1 : 1,2.

5. La composition selon l'une des revendications précédentes, **caractérisée en ce que** les polyols de polyester (A) sont préparés par la réaction des acides dicarboxyliques ou des anhydrides avec des alcools aliphatiques ou cycloaliphatiques polyvalents ayant 2 à 18 atomes de carbone,
et que les polyols de polyester (B) sont préparés par polymérisation par ouverture de cycle de ε-caprolactones avec des alcools aliphatiques ou cycloaliphatiques polyfonctionnels ayant 2 à 1B atomes de carbone comme molécules initiales.

6. La composition selon l'une des revendications précédentes, **caractérisée en ce que** le composant durcisseur a une teneur NCO de 1,5 à 6 mol/kg.

7. La composition selon l'une des revendications précédentes, **caractérisée en ce que** le composant durcisseur contient d'autres oligomères HDI et/ou PDI.

8. La composition selon l'une des revendications précédentes, **caractérisée en ce que** le rapport de mélange volumétrique du composant liant et du composant durcisseur se situe entre 0,9 : 1 et 1 : 1,2.

9. La composition selon l'une des revendications précédentes, **caractérisée en ce que** la composition contient en outre des pigments et/ou des matières de charge.

10. La composition selon l'une des revendications précédentes, **caractérisée en ce que** la composition contient en outre du tamis moléculaire.

11. Utilisation de la composition selon l'une quelconque des revendications 1 à 10 pour la production d'un revêtement anti-érosion.

12. Un composant présentant un revêtement fabriqué à partir d'un matériau de revêtement selon l'une quelconque des revendications 1 à 10.

13. Le composant selon la revendication 12, **caractérisé en ce que** le composant est une pale de rotor d'une éolienne ou d'un hélicoptère, une aile d'un avion ou une hélice de navire.

14. Le composant selon la revendication 12 ou 13, **caractérisé en ce que** le revêtement est une protection de bords.
